# EUROPÄISCHE PATENTSCHRIFT

(11) **EP 0 699 484 B1**
(45) Veröffentlichungstag und Bekanntmachung des Hinweises auf die Patenterteilung: **11.10.2000**
(21) Anmeldenummer: 95111342.2
(22) Anmeldetag: 19.07.1995
(51) Int. Cl.: B05C 17/005

(54) **Vorrichtung zum Schmelzen und dosiertem Abgeben von thermoplastischem Klebstoff**
Apparatus for melting and metered dispensing of thermoplastic adhesive
Appareil pour fondre et distribuer en quantité dosée un adhésif thermoplastique

(30) Priorität: 02.08.1994 DE 9412462 U
(43) Veröffentlichungstag der Anmeldung: 06.03.1996
(73) Patentinhaber: Steinel GmbH & Co. KG, D-33442 Herzebrock-Clarholz (DE)
(72) Erfinder: Steinel, Heinrich Wolfgang jun., D 86825 Bad Wörishofen (DE)
(74) Vertreter: Grünecker, Kinkeldey, Stockmair & Schwanhäusser Anwaltssozietät

(56) Entgegenhaltungen:
- EP-A- 0 205 329
- EP-A- 0 423 388
- FR-A- 2 364 699
- GB-A- 2 028 687
- GB-A- 2 032 303
- US-A- 4 804 110

## Beschreibung

Die vorliegende Erfindung betrifft eine Vorrichtung zum Schmelzen und dosiertem Abgeben von thermoplastischem Klebstoff nach dem Oberbegriff des Schutzanspruchs 1.

Eine solche Vorrichtung findet beispielsweise Verwendung in einer Heißklebepistole, die in den letzten Jahren eine weite Verbreitung gefunden hat. Bei einer solchen Heißklebepistole wird ein Stab aus thermoplastischem Klebstoff, welcher bei Raumtemperatur einen festen Aggregatszustand besitzt, mittels einer mechanisch oder elektrisch betätigbaren Vorschubeinrichtung in eine beheizbare Schmelzkammer eingeführt. In der Schmelzkammer schmilzt der thermoplastische Klebstoff bei einer vorbestimmten Temperatur und nimmt somit einen flüssigen Aggregatszustand an. Unter dem Druck des nachgeführten Klebstoffs wird der flüssige Klebstoff durch eine Austrittsöffnung im Gehäuse der Heißklebepistole herausgepreßt und kann an einer geeigneten Stelle des zu klebenden Werkstücks aufgebracht werden.

Ein wesentliches Problem bei solchen Heißklebepistolen stellt die Abdichtung der Schmelzkammer dar. Um ein Ausfließen des in der Schmelzkammer flüssig gewordenen Klebstoffs aus dem rückwärtigen Ende der Schmelzkammer zu verhindern, ist es üblich, an diese Stelle eine Dichtmanschette anzuordnen. Bisher wurden für die Dichtmanschetten elastische Materialien, wie beispielsweise ein gummiartiges Silikon-Elastomer verwendet. Die Dichtmanschette ist rohrförmig ausgebildet und weist eine radial nach innen ragende Dichlippe auf. Die Dichtmanschette sitzt üblicherweise unmittelbar auf einem an der Heizkammer ausgebildeten Rohrstutzen. Zumindest der unmittelbar auf dem Rohrstutzen sitzende Teil der Dichtungsmanschette wird dabei im Betrieb stark erhitzt, was dazu führt, daß die Dichtungsmanschette ihre elastischen Eigenschaften verliert und daher auch hart und spröde wird, so daß sie die Schmelzkammer entweder nicht mehr hinreichend abdichtet oder daß sich die Dichtungsmanschette von dem Rohrstutzen löst.

Aus der EP-A-423388 ist eine Vorrichtung gemäß dem Oberbegriff des Patentanspruchs 1 bekannt, bei der die zweiteilige Dichtmanschette aus einem Rohrstück aus Metall oder Kunststoff und einer Hülse aus Silikongummi besteht. Das temperaturbeständige Rohrstück umgreift vollständig die Gummihülse und ist auf das Einlaßmundstück einer beheizbaren Düse aufgesetzt.

Der Erfindung liegt die Aufgabe zugrunde, eine Vorrichtung zum Schmelzen vom thermoplastischen Klebstoff anzugeben, die eine verbesserte Abdichtung zwischen Schmelzkammer und Dichtungsmanschette besitzt.

Erfindungsgemäß besteht die Manschette aus einem temperaturbeständigen ersten Teil und einem elastischen zweiten Teil. Das elastische Teil ist in einem Überlappungsbereich von dem ersten Teil umgriffen und das erste Teil ist auf den Rohrstutzen der Schmelzkammer klemmend aufgesetzt.

Das elastische Teil steht somit nicht mit der Schmelzkammer direkt in Verbindung, wie dies bei herkömmlichen Vorrichtungen der Fall ist, sondern wird von dem ersten temperaturbeständigen Teil gehalten. Dadurch ist die Erwärmung des elastischen Teils im Betrieb der Vorrichtung geringer als bei einer herkömmlichen Vorrichtung, wodurch sowohl die Dichtungsfunktion der Manschette und die Verbindung mit der Heizkammer lange erhalten bleibt.

Weiterhin ist gemäß der Erfindung zwischen dem Rohrstutzen und dem ersten Teil der Dichtungsmanschette ein Dichtring angeordnet, welcher in einer entsprechenden Ringnut in der Innenwand des ersten Teils formschlüssig gehalten ist. Ein solcher Dichtungsring dient einer verbesserten Abdichtung und einer weiteren Verbesserung des Klemmsitzes der Dichtungsmanschette auf dem Rohrstutzen.

Vorzugsweise ist der Dichtungsring aus Polytetrafluorethylen (Teflon), einem sehr wärmebeständigen und widerstandsfähigen Material hergestellt.

Gemäß einer bevorzugten Ausgestaltung der Erfindung besitzt das zweite elastische Teil entlang seines äußeren Umfangs einen Wulst, der in eine entsprechend geformte Nut in der Innenwand des ersten Teils der Dichtungsmanschette eingreift. Damit erhält man eine äußerst sichere Verbindung zwischen den beiden Teilen der Dichtungsmanschette, wobei gleichzeitig der Montagevorgang sehr einfach ist. Das elastische Teil muß lediglich in das zweite Teil eingeschoben werden, bis der Wulst in die Ringnut einrastet. Wenn in die Dichtmanschette ein Klebstoffstab eingeführt wird, ist ein gegenseitiges Verschieben der beiden Teile der Dichtmanschette ausgeschlossen. Dies ist besonders wichtig, da bei einer Heißklebepistole oft ein Klebstoffstabwechsel durchgeführt wird, was es erforderlich macht, die beiden Teile sowohl bei Zug- als auch bei Druckbelastung gegen Verschieben zu sichern.

Vorzugsweise besteht das erste Teil der Dichtungsmanschette aus einem Polyphenylensulfid (PPF-Harz), welches auch unter dem Handelsnamen Ryton bekannt ist. Ein solches Material besitzt eine hervorragende Wärmebeständigkeit, einen geringen Temperaturausdehnungskoeffizienten und hohe Festigkeit.

In einer weiteren vorteilhaften Ausgestaltung der Erfindung besitzt das zweite Teil der Dichtmanschette an seinem dem Rohrstutzen zugewandten Ende einen radial nach innen ragenden Dichtring, wobei die Stirnseite des zweiten Teils an der Stirnseite des Rohrstutzens anliegt. Der nach innen ragende Dichtring verbessert die Abdichtung der Schmelzkammer und hält eventuell vorhandene Schmutzreste an der Oberfläche des Klebstoffstabes zurück, so daß diese nicht in die Schmelzkammer gelangen können. Da die Stirnseite des zweiten Teils an der Stirnseite des Rohrstutzens anliegt, ist die Wärmekopplung zwischen der Schmelzkammer und dem zweiten elastischen Teil nur minimal, wodurch die Erwärmung des elastischen Teils weiter verringert wird.

Schließlich ist es von Vorteil, wenn sich der Querschnitt des ersten Teils in entgegengesetzter Richtung zur Einführrichtung des Klebstoffs verjüngt. Dies führt zu einem Temperaturgefälle in dem ersten Teil, nämlich von dem Ende mit größerem Querschnitt zum anderen Ende mit niedrigem Querschnitt. Durch diese Maßnahme wird ebenfalls die Wärmekopplung zwischen dem ersten und zweiten Teil der Dichtmanschette herabgesetzt.

Die Erfindung soll nachstehend anhand der sie beispielsweise wiedergebenden Zeichnungen näher erläutert werden. Es zeigt:
- Fig. 1: einen Längsschnitt durch einen Teil der Schmelzkammer und der aufgesetzten Dichtungsmanschette und
- Fig. 2: in einer vergrößerten Ansicht einen Längsschnitt des ersten Teils der Dichtungsmanschette.

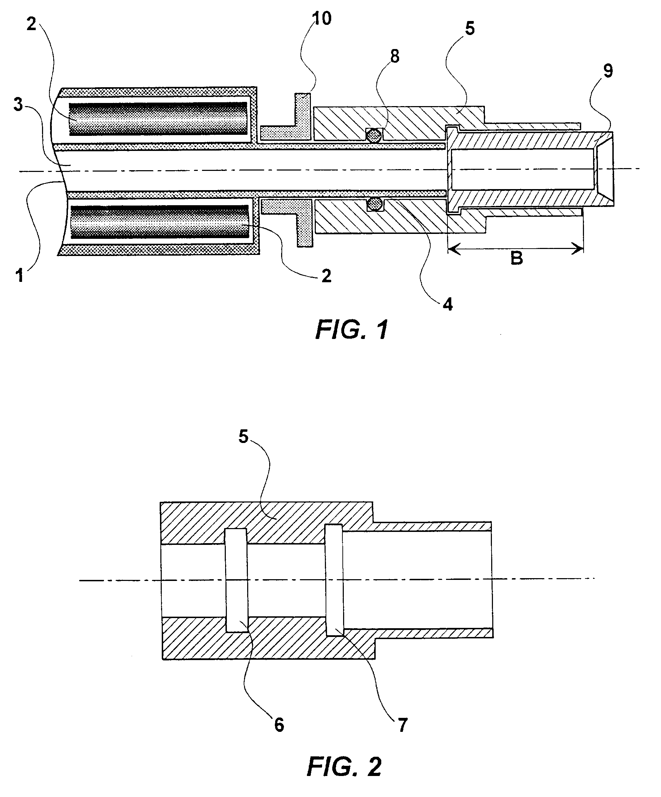

Figur 1 zeigt den rückwärtigen Teil der Schmelzkammer 1 einer Heißklebepistole mit zwei Heizelementen 2, die auf sich gegenüberliegenden Seiten des Schmelzkanals 3 angeordnet sind. Der Schmelzkanal erstreckt sich in axialer Richtung in Form eines Rohrstutzens 4, der einstückig mit der Schmelzkammer 1 ausgebildet ist. Im Betrieb der Heizklebepistole wird ein Klebstoffstab aus thermoplastischem Material in Pfeilrichtung durch eine Dichtungsmanschette hindurch in die Schmelzkammer eingeschoben. Wenn die Schmelzkammer eine genügend hohe Temperatur aufweist, verflüssigt sich dort der Klebstoff.

Die erfindungsgemäße Dichtungsmanschette besteht aus einem temperaturbeständigen ersten Teil 5, welches klemmend auf den Rohrstutzen 4 aufgesetzt ist. Das erste Teil 5 besitzt einen im wesentlichen hohlzylindrische Form mit einer Länge von etwa 35 mm und einem Außen- bzw. Innendurchmesser von 24 mm bzw. 15,4 mm an der Seite, welche der Schmelzkammer zugewandt ist. Auf der anderen, der Schmelzkammer abgewandten Seite, beträgt der Außendurchmesser 20,2 mm und der Innendurchmesser 18,2 mm. Die weiteren Abmessungen des ersten Teils ergeben sich aus der Fig. 2. Als Material für das erste Teil 5 der Dichtungsmanschette hat sich ein Polyphenylensulfid-Harz (Handelsname Ryton&R&) als hervorragend herausgestellt, da dieses Material einen geringen Wärmeausdehnungskoeffizienten und eine Unempfindlichkeit gegenüber Temperaturen bis zu 200°C zeigt. Entlang der Innenwandung des ersten Teils 5 der Dichtungsmanschette sind zwei etwa 3 bis 3,5 mm breite Ringnuten 6, 7 ausgebildet, wie aus Fig. 2 deutlicher hervorgeht. In der ersten Ringnut wird ein Dichtungsring 8 formschlüssig gehalten. Die Tiefe der Ringnut 6 und der Durchmesser des darin gehaltenen Dichtungsrings 8 ist so gewählt, daß im zusammengesteckten Zustand der Vorrichtung das erste Teil 5 klemmend mit dem Rohrstutzen 4 verbunden ist.

Das elastische zweite Teil 9, das von dem ersten Teil 5 in einem Überlappungsbereich B umgriffen ist, weist entlang seines äußeren Umfangs einen ringartigen Wulst auf, der in der zweiten Ringnut 7 (Fig. 2) formschlüssig gehalten ist. An demjenigen Ende des zweiten Teils 9, welches dem Rohrstutzen zugewandt ist, efindet sich entlang seines Innenumfangs ein radial nach innen ragender Dichtring. Dieser Dichtring verbessert die Abdichtung der Schmelzkammer um zu verhindern, daß flüssiger Klebstoff aus der Schmelzkammer austritt und sich im Gehäuse festsetzt. Das zweite Teil 9 der Dichtungsmanschette besteht beispielsweise aus einem gummiartigen Silikon-Elastomer, es ist jedoch auch möglich, andere Gummiarten oder elastische Kunststoffe zu verwenden.

Um eine möglichst geringe Wärmeeinkopplung zwischen den Heizelementen 2 bzw. der Schmelzkammer 1 und der Dichtungsmanschette 5, 9 zu erreichen, kann zusätzlich ein Dichtungs- oder Isolierring 10 auf den Rohrstutzen der Schmelzkammer aufgesteckt werden. Als eine zusätzliche Maßnahme zur Vermeidung der Erwärmung des elastischen zweiten Teils 9 besitzt das erste Teil 5 einen Querschnitt, der sich in rückwärtiger Richtung, d.h. entgegengesetzt zur Einführrichtung eines Klebstoffstabs verjüngt (Fig. 2). Je geringer der Querschnitt des ersten Teils 5, desto kleiner ist die Übertragung von Wärme auf das zweite Teil 9. In dem, in den
Figuren gezeigten Ausführungsbeispiel ist der Querschnitt des ersten Teils 5 in dem Bereich, der auf dem Rohrstutzen aufgesetzt ist und in etwa der Hälfte des Überlappungsbereichs mit dem zweiten Teil 9 mit einem größeren Querschnitt ausgeführt, um eine ausreichende mechanische Festigkeit zu erreichen. Die andere Hälfte des Überlappungsbereichs B weist demgegenüber einen verminderten Querschnitt auf. Dadurch ist im Betrieb der Vorrichtung die Erwärmung des zweiten Teils 9 geringer, was zu einer erhöhten Lebensdauer der Vorrichtung führt.

## Patentansprüche

1. Vorrichtung zum Schmelzen und dosierten Abgeben von thermoplastischem Klebstoff, mit einer beheizbaren Schmelzkammer, die an ihrem eintrittsseitigen Ende einen daran ausgebildeten Rohrstutzen aufweist und einer Dichtungsmanschette, die in axialer Richtung eine Durchgangsöffnung aufweist, durch die der Klebstoff in die Schmelzkammer einführbar ist, wobei die Dichtungsmanschette (5, 9) zweiteilig ausgebildet ist, bestehend aus einem temperaturbeständigen ersten Teil (5) und einem zweiten elastischen Teil (9), welches in einem Überlappungsbereich (B) von dem ersten Teil (5) umgriffen ist, und das erste Teil (5) auf dem Rohrstutzen (4) klemmend aufgesetzt ist, **dadurch gekennzeichnet,** daß zwischen dem Rohrstutzen (4) und dem ersten Teil (5) der Dichtungsmanschette ein Dichtungsring (8) angeordnet ist, der in einer Ringnut der Innenwand der ersten Teils (5) formschlüssig gehalten ist.

2. Vorrichtung nach Anspruch 1, **dadurch gekennzeichnet,** daß der Dichtungsring (8) aus Polytetrafluorethylen besteht.

3. Vorrichtung nach einem der Ansprüche 1 oder 2, **dadurch gekennzeichnet,** daß das zweite elastische Teil (9) entlang seines äußeren Umfangs eine Wulst aufweist, die in eine entsprechend geformte Nut (7) in der Innenwand des ersten Teils (5) der Dichtungsmanschette eingreift.

4. Vorrichtung nach wenigstens einem der Ansprüche 1 bis 3, **dadurch gekennzeichnet,** daß das zweite Teil (9) der Dichtungsmanschette aus einem gummielastischen Material, beispielsweise Silikonkautschuk, besteht.

5. Vorrichtung nach wenigstens einem der Ansprüche 1 bis 4, **dadurch gekennzeichnet,** daß das erste Teil (5) der Dichtungsmanschette aus einem Polyphenylensulfid (PPF-Harz)-Material besteht.

6. Vorrichtung nach wenigstens einem der Ansprüche 1 bis 5, **dadurch gekennzeichnet,** daß das zweite Teil (9) der Dichtungsmanschette an seinem dem Rohrstutzen (4) zugewandten Ende einen radial nach innen ragenden Dichtring aufweist und daß die Stirnseite des zweiten Teils (9) an der Stirnseite des Rohrstutzens (4) anliegt.

7. Vorrichtung nach wenigstens einem der Ansprüche 1 bis 6, **dadurch gekennzeichnet,** daß der Querschnitt des ersten Teils (5) sich in entgegengesetzter Richtung zur Einführrichtung des Klebstoffs verjüngt.

## Claims

1. Device for melting and dispensing metered amounts of thermoplastic adhesive, comprising a heatable melting chamber, having a connecting sleeved formed at the entry side of the melting chamber, and a sealing collar, having a through opening in the axial direction, through which the adhesive can be inserted into the melding chamber, wherein the sealing collar (5, 9) is composed of two pieces, consisting of a heat-proof first part (5) and a resilient second part (9), which is enclosed in an overlapping region (B) by the first part (5), and that the first part (5) is clamped into the connecting sleeve (4), **characterized in that** a sealing ring (8) is arranged between the connecting sleeve (4) and the first part (5) of the sealing collar, said sealing ring (8) being positively retained within an annular groove of the inner wall of the first part (5).

2. A device as claimed in claim 1, **characterized in that** the sealing ring (8) consists of polytetrafluor ethylene.

3. A device as claimed in one of claims 1 or 2, **characterized in that** the resilient second part (9) comprises a bead along its outer periphery which engages into an appropriately shaped groove (7) in the inner wall of the first part (5) of the sealing collar.

4. A device as claimed in at least one of claims 1 to 3, **characterized in that** the second part (9) of the sealing collar consists of a resilient material, e.g. silicone caoutchouc.

5. A device as claimed in at least one of claims 1 to 4, **characterized in that** the first part (5) of the sealing collar is made of a polyphenylene sulphide material (PPF resin).

6. A device as claimed in at least one of claims 1 to 5, **characterized in that** the second part (9) of the sealing collar comprises a radially inwardly projecting sealing ring at the end facing the connecting sleeve (4), and that the front side of the second part (9) abuts the front side of the connecting sleeve (4).

7. A device as claimed in at least one of claims 1 to 6, **characterized in that** the cross-section of the first part (5) diminishes in the opposite direction towards the insertion direction of the adhesive.

## Revendications

1. Dispositif pour la fusion et la distribution dosée d'un adhésif thermoplastique, avec une chambre de fusion pouvant être chauffée, qui présente à son extrémité du côté de l'entrée une tubulure formée dessus et une garniture cylindrique présentant dans le sens axial une ouverture de passage, par laquelle l'adhésif peut être introduit dans la chambre de fusion, la garniture cylindrique (5, 9) étant conçue en deux parties, composée d'une première partie à constance thermique (5) et d'une deuxième partie élastique (9), laquelle est enveloppée dans une zone de recouvrement (B) par la première partie (5), et la première partie (5) est posée par serrage sur la tubulure (4), caractérisé en ce que entre la tubulure (4) et la première partie (5) de la garniture cylindrique est disposé un anneau de garniture (8), qui est maintenu par engagement positif dans une rainure annulaire de la paroi interne de la première partie (5).

2. Dispositif selon la revendication 1, caractérisé en ce que l'anneau de garniture (8) se compose de polytétrafluoréthylène.

3. Dispositif selon l'une des revendications 1 ou 2, caractérisé en ce que la deuxième partie élastique (9) présente le long de sa circonférence extérieure un renflement, qui engrène dans une rainure formée en conséquence (7) dans la paroi interne de la première partie (5) de la garniture cylindrique.

4. Dispositif selon l'une au moins des revendications 1 à 3, caractérisé en ce que la deuxième partie (9) de la garniture cylindrique est composée d'une matière élastomère, par exemple de caoutchouc silicone.

5. Dispositif selon l'une au moins des revendications 1 à 4, caractérisé en ce que la première partie (5) de la garniture cylindrique se compose d'une matière au polysulphure (résine PPF).

6. Dispositif selon l'une au moins des revendications 1 à 5, caractérisé an ce que la deuxième partie (9) de la garniture cylindrique présente sur son extrémité orientée vers la tubulure (4) une bague d'étanchéité faisant saillie vers l'intérieur radialement et en ce que la face frontale de la deuxième partie (9) adhère à la face frontale de la tubulure (4).

7. Dispositif selon l'une au moins des revendications 1 à 6, caractérisé en ce que la section transversale de la première partie (5) s'amincit dans le sens contraire au sens d'introduction de l'adhésif.
